# EUROPÄISCHE PATENTSCHRIFT

(11) **EP 0 728 916 B1**
(45) Veröffentlichungstag und Bekanntmachung des Hinweises auf die Patenterteilung: **08.09.1999**
(21) Anmeldenummer: 96810090.9
(22) Anmeldetag: 15.02.1996
(51) Int. Cl.: F01K 23/10

(54) **Verfahren zum Betrieb einer Kraftwerksanlage**
Process for operating a power plant
Procédé de fonctionnement d'une centrale d'énergie

(30) Priorität: 27.02.1995 DE 19506727
(43) Veröffentlichungstag der Anmeldung: 28.08.1996
(73) Patentinhaber: ASEA BROWN BOVERI AG, 5400 Baden (CH)
(72) Erfinder: Nielsen, Henrik, CH-5430 Wettingen (CH)

(56) Entgegenhaltungen:
- EP-A- 0 281 151
- EP-A- 0 400 370
- EP-A- 0 579 061
- DE-A- 2 821 397
- DE-C- 3 741 882

## Beschreibung

### Technisches Gebiet

Die Erfindung betrifft ein Verfahren und eine Vorrichtung zum Betrieb einer Kraftwerksanlage gemäss Oberbegriff des Patentanspruchs 1.

### Stand der Technik

Derartige Verfahren zum Betrieb einer Kraftwerksanlage sind bekannt. Im Abhitzedampferzeuger wird den Abgasen der Gasturbogruppe Wärmeenergie entzogen und mit dieser Wärmeenergie Wasser verdampft. Der gewonnene Dampf kann beispielsweise mit Hilfe einer Dampfturbine in Elektrizität umgewandelt oder in einer Industrieanlage in vielfältigen Funktionen verwendet werden.

In den Abgasen befindet sich bei Verwendung von schwefelhaltigen Brennstoff Schwefelsäure. Sinkt die Abgastemperatur oder Kesselrohrwand-Temperatur unter den Taupunkt der Schwefelsäure, kondensiert die Säure und es können korrosionsbedingte Schäden im Abhitzedampferzeuger auftreten.

Ein Verfahren und eine Kraftwerksanlage der eingangs genannten Art sind bekannt aus der EP-A-0400370. Um die Temperatur der Rauchgase jederzeit oberhalb der Säuretaupunkt-Temperatur zu halten, wird dort der Speisewasserstrom vor Eintritt in den Abhitzekessel unterteilt. Eine erste Teilmenge wird in einen separaten, als Entgaser wirkenden Kessel eingeleitet.

Je nach Schwefelgehalt der Rauchgase wird die zweite Teilmenge des den Niederdruck-Economiser durchströmenden Speisewassers in Funktion der Austrittstemperatur der Rauchgase aus dem Abhitzekessel variiert. Ist die im Economiser aufgeheizte Wassermenge, die ebenfalls den Entgaser beaufschlagt, zu gering, um den für die Entgasung notwendigen Druck aufrechtzuerhalten, so wird zusätzlich Niederdruckdampf aus einer Dampftrommel des Abhitzekessels in den Entgaser geleitet. Bei diesem Verfahren wird die Gesamtmenge des geförderten Speisewassers nicht beinflusst.

### Darstellung der Erfindung

Der Erfindung liegt die Aufgabe zugrunde, bei einem Verfahren zum Betrieb einer Kraftwerksanlage der eingangs genannten Art eine einfache und wirtschaftliche Regelung des Abhitzedampferzeugers bei Verwendung von Brennstoffen mit beliebigem Schwefelgehalt zu entwerfen.

Erfindungsgemäss wird dies mit den kennzeichnenden Merkmalen der Patentansprüche erreicht.

Die Vorteile der Erfindung sind unter anderem darin zu sehen, dass keine speziellen Komponenten zur Vorwärmung des in den Abhitzedampferzeuger eintretenden Wassers nötig sind. Dadurch werden Anlagekosten sowie Dampf eingespart, der sonst zur Vorwärmung benötigt wird. Dadurch wird die Wirtschaftlichkeit einer solchen Anlage bedeutend gesteigert.

Es ist besonders zweckmässig, wenn die Berohrung der letzten Stufe des Abhitzedampferzeugers, vor dem Austritt des Abgases aus dem Abhitzedampferzeuger in den Kamin, entsprechend der Lebensdauer des Abhitzedampferzeugers ausgelegt ist. Besonders vorteilhaft ist dabei die Ausgestaltung der letzten Stufe aus einem korrosionsbeständigen Material. Dies schützt den Abhitzedampferzeuger an den Stellen, die bedingt durch die niedrige Wassereintrittstemperatur einer Kondensationsschicht von Schwefelsäure ausgesetzt sind. Da bei einem hohen Temperaturunterschied zwischen Abgas und Wasser die zum Wärmetausch benötigte Fläche reduziert werden kann, können die relativ hohen Kosten der korrosionsbeständigen Materialien kompensiert werden.

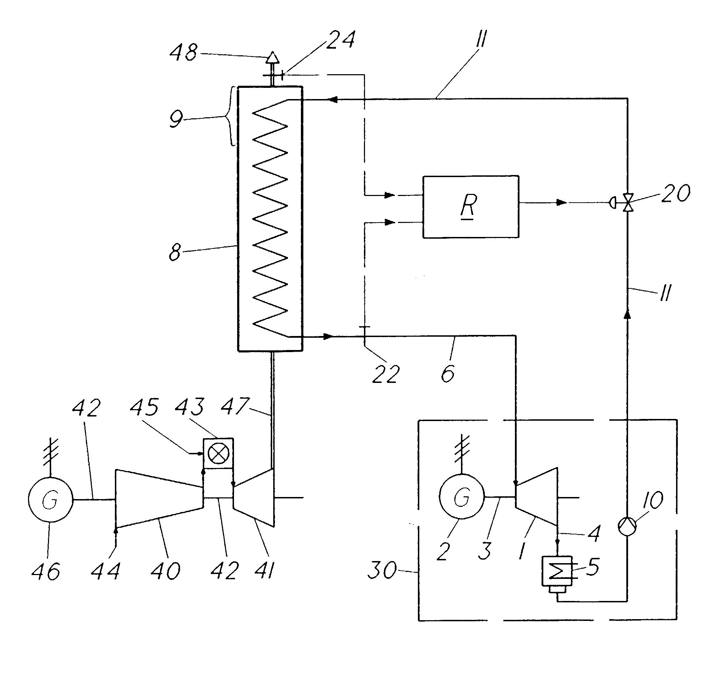

### Kurze Beschreibung der Zeichnung

In der einzigen Zeichnung ist ein Ausführungsbeispiel der Erfindung anhand einer schematischen Darstellung einer kombinierten Gas- und Dampfturbinenanlage dargestellt.

Es sind nur die für das Verständnis der Erfindung wesentlichen Elemente gezeigt.

### Weg zur Ausführung der Erfindung

Die dargestellte Gasturbogruppe besteht im wesentlichen aus einem Verdichter 40, einer Turbine 41 und einem Generator 46, die über eine Welle 42 verbunden sind, sowie einer Brennkammer 43. Im Verdichter 40 wird Luft über eine Luftzuführung 44 angesaugt, komprimiert und die verdichtete Luft in die Brennkammer 43 geleitet. Dort wird der Verbrennungsluft Brennstoff 45 zugeführt und das Brennstoff-Luft-Gemisch verbrannt. Die entstandenen Rauchgase werden in die Turbine 41 eingeleitet, wo sie entspannt werden und ein Teil der Energie der Rauchgase in Drehenergie umgewandelt wird. Diese Drehenergie wird über die Welle 42 zum Antrieb des Generators 46 verwendet.

Die noch heissen Abgase werden über eine Abgasleitung 47 einem Abhitzedampferzeuger 8 zugeführt. Im Abhitzedampferzeuger 8 wird dem Abgas Wärmeenergie entzogen und damit Wasser verdampft. Nach Abgabe der Wärmeenergie wird das Abgas über einen Kamin 48 ins Freie geleitet. Das Wasser wird über eine Wasserleitung 11 im Gegenstrom, in einem Durchlauf durch den Abhitzedampferzeuger 8 geleitet. Der entstandene, überhitzte Dampf wird über eine Dampfleitung 6 einem Dampfverbraucher 30 zugeführt. Beim Dampfverbraucher 30 handelt es sich im dargestellten Fall um eine Dampfturbine 1. Der Dampf wird in der Dampfturbine 1 arbeitsleistend entspannt und die gewonnen Energie über eine Welle 3 an einem Generator 2 abgegeben. Der über eine Abdampf leitung 4 austretende Abdampf wird in einem Kondensator 5 kondensiert und im zugehörigen Hotwell zwischengespeichert. Das kondensierte Wasser wird über eine Pumpe 10 und eine Wasserleitung 11 zum Abhitzedampferzeuger 8 gefördert.

Vor dem Eintritt der Wasserleitung 11 in den Abhitzedampferzeuger 8 ist ein Regelungsventil 20 in der Wasserleitung 11 angebracht.

Die Austrittstemperatur des Dampfes aus dem Abhitzedampferzeuger 8 wird über einen Temperaturmesser 22 in der Dampfleitung 6 gemessen, oder alternativ über die Menge und den Druck des Dampfes. Die Abgastemperatur wird über einen Temperaturmesser 24 am Austritt des Abgases aus dem Abhitzedampferzeuger 8 ermittelt.

Wird in der Brennkammer 43 Brennstoff verbrannt, welcher Schwefel enthält, so wird ein Teil des Schwefels in Schwefeltrioxid SO₃ umgewandelt. Daraus entsteht beim Kontakt mit Wasser Schwefelsäure. Zur Regelung werden nun im wesentlichen zwei Fälle unterschieden:

Bei Brennstoffen mit keinem oder niedrigem Schwefelgehalt, bsw. Erdgas, ist der Säureanteil sehr gering. Der Taupunkt bei einer geringen Menge Schwefelsäure liegt zudem so tief (unterhalb ca 50°C), dass im Abhitzedampferzeuger 8 keine Korrosionsprobleme entstehen. Das Regelventile 20 wird dann abhängig von der Temperatur des Dampfes bei dem Temperaturmesser 22 über eine Regelvorrichtung R gesteuert, wodurch die Dampfausbeute optimiert werden kann. Wird bsw. vom Temperaturmesser 22 eine zu geringe Dampftemperatur registriert, wird der Durchfluss von Wasser beim Regelventil 20 reduziert. Durch die geringere Durchflussmenge durch den Abhitzedampferzeuger 8 steigt die Temperatur des Dampfes beim Temperaturmesser 22 an. Steigt dort die Dampftemperatur über einen vorgegebenen Wert, wird das Regelventil 20 wieder mehr geöffnet. Bei der Verwendung von zwei oder mehreren Wasser-/Dampf-Druckkreisläufen müssen diese zusätzlich aufeinander abgestimmt werden, wobei die Regelungseinrichtung R auf optimale Energieausbeute durch die Dampfturbine 1 ausgelegt wird.

Bei Brennstoffen mit mittleren und hohen Schwefelgehalten, bsw. Erdöl, liegt der gebildete Schwefelsäureanteil und der Schwefelsäuretaupunkt so hoch (oberhalb ca 125°C), dass im Abhitzedampferzeuger 8 Korrosionsprobleme entstehen. Die Abgastemperatur darf im Abhitzedampferzeuger 8 deshalb nicht unter die dem jeweiligen Schwefelsäuregehalt zugeordnete Taupunkttemperatur der Schwefelsäure fallen. In diesem Fall ist die regelungsbestimmende Grösse die mit dem Temperaturmesser 24 gemessene Abgastemperatur. Im Abhitzedampferzeuger 8 wird dem Abgas durch die Durchflussbegrenzung des Wassers mit Hilfe des Regelventiles 20 nur soviel Wärmeenergie entzogen, dass die Abgastemperatur oberhalb der jeweiligen Schwefelsäuretaupunkt gehalten wird.

Durch die wegen fehlender oder geringer Vorwärmung niedrige Temperatur des in den Abhitzedampferzeuger 8 eintretenden Wassers, bildet sich auf der Oberfläche der vom Wasser durchflossenen Rohre einer letzten Stufe 9 im Abhitzedampferzeuger eine dünne Kondensationsschicht von Schwefelsäure. Diese kann jedoch nicht anwachsen, da die Abgastemperaturen höher gewählt sind als der Schwefelsäuretaupunkt. Dort wo die Wassertemperatur des eingespeisten Wassers noch so niedrig ist, dass sich ein Säurefilm bilden kann, d.h. in der letzte Stufe 9 des Abhitzedampferzeuger 8, muss die Berohrung entsprechend angepasst werden. Allgemein gilt für beliebige Werkstoffe, dass die Wandstärke der Berohrung der letzten Stufe 9 entsprechend dem zu erwartenden Korrosionsangriff und der gewünschten Lebensdauer auszulegen ist. Die Wandstärke der Berohrung wird also bei nicht korrosionsbeständigen Werkstoffen dem Abtrag durch die Korrosion entsprechend dicker gewählt. Vorteilhaft ist die Verwendung korrosionsbeständiger Werkstoffe, bsw. rostfreier Stahl oder eine säurefeste Beschichtung der Berohrung. Hier tritt kein Korrosionsabtrag auf, wodurch wesentlich weniger Material verwendet werden muss.

Selbstverständlich ist die Erfindung nicht auf das gezeigte und beschriebene Ausführungsbeispiel beschränkt. Die Dampfturbine kann durch einen beliebigen Dampfverbraucher ersetzt werden. Das Wasser kann dann beispielsweise nicht mehr zurückgewonnen werden, weshalb direkt genügend entgastes und demineralisiertes Frischwasser in den Abhitzedampferzeuger eingespeist wird. Im Abhitzedampferzeuger ist die Zahl der Wasser-/Dampf-Druckstufen beliebig und muss den jeweiligen Gegebenheiten angepasst werden.

### Bezugszeichenliste

- 1: Dampfturbine
- 2: Generator
- 3: Welle
- 4: Abdampfleitung
- 5: Kondensator mit Hotwell
- 6: Dampfleitung
- 8: Abhitzedampferzeuger
- 9: Stufe
- 10: Pumpe
- 11: Wasserleitung

- 20: Regelventil
- 22: Temperaturmesser (Dampf)
- 24: Temperaturmesser (Abgas)
- 30: Dampfverbraucher
- 40: Verdichter
- 41: Turbine
- 42: Welle
- 43: Brennkammer
- 44: Luftzuführung
- 45: Brennstoff
- 46: Generator
- 47: Abgasleitung
- 48: Kamin
- R: Regeleinrichtung

## Patentansprüche

1. Verfahren zum Betrieb einer Kraftwerksanlage, im wesentlichen bestehend aus einer Gasturbogruppe (40, 41, 46), einem Abhitzedampferzeuger (8) und einem nachgeschalteten Dampfverbraucher (30), wobei das Abgas der Gasturbogruppe (40, 41, 46) Wärme an das im Gegenstrom durch den Abhitzedampferzeuger (8) geführte Wasser abgibt und wobei der erzeugte Dampf über mindestens eine Dampfleitung (6) dem Dampfverbraucher (30) zugeführt wird,
dadurch gekennzeichnet,
dass das Wasser eine beliebige Temperatur aufweist und über mindestens eine Wasserleitung (11) mit einem zugeordneten Regelungsventil (20) zur Durchflussbegrenzung direkt in den Abhitzedampferzeuger (8) eingespeist wird und
dass bei Verwendung von Brennstoffen mit Schwefelgehalten das Regelungsventil (20) über die mit einem Temperaturmesser (24) gemessene Temperatur des Abgases am Austritt des Abhitzedampferzeugers (8) gesteuert wird.

2. Vorrichtung zur Durchführung des Verfahrens zum Betrieb einer Kraftwerksanlage nach Anspruch 1,
dadurch gekennzeichnet,
dass die Berohrung einer letzte Stufe (9) des Abhitzedampferzeuger (8), vor dem Austritt des Abgases aus dem Abhitzedampferzeuger (8) in den Kamin aus einem korrosionsbeständigen Material besteht.

## Claims

1. Method of operating a power station plant, essentially comprising a gas-turbine group (40, 41, 46), a waste-heat steam generator (8) and a downstream steam consumer (30), the exhaust gas from the gas-turbine group (40, 41, 46) releasing heat to the water conducted in counterflow through the waste-heat steam generator (8), and the steam produced being fed to the steam consumer (30) via at least one steam line (6), characterized in that the water is at any temperature and is fed directly into the waste-heat steam generator (8) via at least one water line (11) having an allocated regulating valve (20) for limiting the flow, and in that, during the use of fuels having sulphur contents, the regulating valve (20) is controlled via the temperature of the exhaust gas, which tempeature is measured with a temperature-measuring device (24), at the discharge from the waste-heat steam generator (8).

2. Apparatus for carrying out the method of operating a power station plant according to Claim 1, characterized in that the tubing of a last stage (9) of the waste-heat steam generator (8), before the discharge of the exhaust gas from the waste-heat steam generator (8) into the stack, is made of a corrosion-resistant material.

## Revendications

1. Procédé pour la conduite d'une centrale thermique, se composant essentiellement d'un turbogroupe à gaz (40, 41, 46), d'un générateur de vapeur à récupération (8) et d'un consommateur de vapeur (30) disposé à la suite, dans lequel les gaz d'échappement du turbogroupe à gaz (40, 41, 46) cèdent de la chaleur à l'eau circulant à contre-courant à travers le générateur de vapeur à récupération (8) et dans lequel la vapeur produite est conduite au consommateur de vapeur (30) par au moins une conduite de vapeur (6), caractérisé en ce que
l'eau présente une température quelconque et est introduite directement dans le générateur de vapeur à récupération (8) par au moins une conduite d'eau (11) avec une vanne de régulation asservie (20) pour la limitation du débit, et en ce que
lors de l'utilisation de combustibles contenant du soufre, la vanne de régulation (20) est commandée par la température des gaz d'échappement à la sortie du générateur de vapeur à récupération (8), mesurée par un capteur de température (24).

2. Dispositif pour la mise en oeuvre du procédé de conduite d'une centrale thermique suivant la revendication 1,
caractérisé en ce que
le tubage d'un dernier étage (9) du générateur de vapeur à récupération (8), avant la sortie des gaz d'échappement hors du générateur de vapeur à récupération (8) dans la cheminée, se compose d'une matière résistant à la corrosion.
